# EUROPEAN PATENT SPECIFICATION

(11) **EP 4 088 796 B1**
(45) Date of publication and mention of the grant of the patent: **28.10.2026**
(21) Application number: 21173803.4
(22) Date of filing: 14.05.2021
(51) Int. Cl.: B01D 1/00, A23F 3/42, A23F 5/48, A23L 27/10, B01D 5/00, B01D 11/02, B01J 19/12, C11B 9/02, H05B 6/80, B01D 3/10, B01D 3/02, B01D 3/40

(54) **DISTILLATION APPARATUS AND METHOD FOR EXTRACTION OF VOLATILE COMPONENTS FROM BIOLOGICAL MATERIAL, ESPECIALLY FROM PLANTS**
DESTILLATIONSVORRICHTUNG UND VERFAHREN ZUR EXTRAKTION VON FLÜCHTIGEN BESTANDTEILEN AUS BIOLOGISCHEM MATERIAL, INSBESONDERE AUS PFLANZEN
PROCÉDÉ ET APPAREIL DE DISTILLATION POUR L'EXTRACTION DE COMPOSANTS VOLATILS DE MATÉRIAUX BIOLOGIQUES, NOTAMMENT DE PLANTES

(43) Date of publication of application: 16.11.2022
(73) Proprietor: Mikrowellen Labor Technik AG, 9435 Heerbrugg (CH)
(72) Inventor: LAUTENSCHLÄGER, Jens, 9435 Heerbrugg (CH)
(74) Representative: Kiwit, Benedikt

(56) References cited:
- EP-A2- 0 294 177
- WO-A1-2007/007068
- WO-A1-2017/223519
- WO-A1-2019/106313
- FR-A1- 3 003 181
- US-A1- 2004 147 767
- US-A1- 2011 014 331
- US-A1- 2015 068 113
- AURORE FILLY ET AL: "Solvent-free microwave extraction of essential oil from aromatic herbs: From laboratory to pilot and industrial scale", FOOD CHEMISTRY, vol. 150, 1 May 2014 (2014-05-01), NL, pages 193 - 198, XP055712974, ISSN: 0308-8146, DOI: 10.1016/j.foodchem.2013.10.139
- PÉRINO SANDRINE ET AL: "Laboratory to pilot scale: Microwave extraction for polyphenols lettuce", FOOD CHEMISTRY, ELSEVIER LTD, NL, vol. 204, 15 February 2016 (2016-02-15), pages 108 - 114, XP029446329, ISSN: 0308-8146, DOI: 10.1016/J.FOODCHEM.2016.02.088
- RAMADAN LINA ET AL: "A New Hybrid System for Reuse of Agro-industrial Wastes of Acerola: Dehydration and Fluid Dynamic Analysis", WASTE AND BIOMASS VALORIZATION, SPRINGER NETHERLANDS, NL, vol. 10, no. 8, 23 February 2018 (2018-02-23), pages 2273 - 2283, XP036831701, ISSN: 1877-2641, [retrieved on 20180223], DOI: 10.1007/S12649-018-0247-4

## Description

The present invention relates to a distillation apparatus and method for extraction of volatile components such as oils from biological material, especially from plants by means of microwave radiation. Preferably, the biological material may be plant material from the biological family Cannabaceae.

Extraction of volatile components is used to gain products or intermediate products, which may be used in the fields of pharmacy, medicine, cosmetics, food technology and the like. In case of Cannabaceae, it may be desirable to extract terpenes as volatile components, preferably as a pre-processing step.

Methods for extraction of volatile components by means of microwave radiation are known. Usually, the biological material is heated by microwave radiation, such that water in the biological material evaporates and breaks the cell structure, so that both, water vapor and volatile components are released and can be collected, e.g. by means of condensation.

An apparatus and method for extraction of volatile components from biological material such as plants by means of microwave radiation is known, for example, from EP 1 629 725 A1.

Further relevant technologies in the state of the art are described in FR 3 003 181 A1, which discloses a method and apparatus for extraction of volatile biological products via microwave radiation, with the apparatus comprising a rotating bowl inside an irradiation chamber with a window permeable to microwave radiation, the bowl having a rotation axis inclined relative to the vertical, and the chamber having a selectively sealable inlet for receiving organic materials, an outlet leading to a collection apparatus for vapors, and an inlet for reinjecting superheated steam from the outlet after separation of solvent from collected volatile biological products; and

WO 2019/106 313 A1 and FILLY, Aurore et al. Solvent-free microwave extraction of essential oil from aromatic herbs: From laboratory to pilot and industrial scale. FOOD CHEMISTRY. vol. 150, May 2014 (2014-05-01), pages 193-198, XP055712974, ISSN 0308-8146 <https://www.sciencedirect.com/science/article/pii/S0308814613015884> <https://doi.org/10.1016/j.foodchem.2013.10.139> which both disclose apparatuses for extraction of biological products via microwave radiation, with each apparatus including the features from the preamble of independent claim 1.

FR 3 003 181 A1 and WO 2019/106 313 A1 each disclose methods for extraction of volatile biological products including loading biological materials into a rotating drum, microwave irradiation of said biological materials, and subsequent collection of volatiles from said biological materials. In WO 2019/106 313 A1 it is specified that the drum may be horizontal.

In EP 1 629 725 A1, the biological material is loaded into a glass container, which is rotatable about a vertical axis by means of a rotary plate. The glass container is arranged in a microwave oven. The glass container is sealably connected to a cylindrical connecting duct, so that the interior of the container is isolated from the microwave oven. The cylindrical connecting duct leads to an upper outside of the microwave oven, where it is connected to a condenser. The biological material rests on a carrier plate, the carrier plate having three support stands resting on the bottom of the glass container. The glass container is partially filled with water, such that the biological material does not immerse in water. Radiating the biological material and water in the glass container with microwave radiation then leads to the breakage of cell walls and release of volatile components from the biological materials and simultaneously leads to water vapor formation, further promoting the release of volatile components. The volatile materials can be collected after condensing it in the condenser.

However, as the glass container is rotating relative to the cylindrical connecting duct, the sealing interposed therebetween has to be renewed for each cycle of extraction. This increases both, time needed for preparing the next cycle and material consumption.

The present invention has been made considering the above circumstances and aims at providing an apparatus and method with simplified handling and increased efficiency.

This object is solved by the present invention according to the independent claims. The dependent claims study further advantageous aspects of the present invention.

According to a first aspect of the present invention, there is provided a distillation apparatus (in the following also simply referred to as "apparatus") for extraction of volatile components from biological material, especially from plants (such as plant material from the biological family Cannabaceae). The apparatus comprises a housing defining a sample chamber. The apparatus further comprises a drum arranged in the sample chamber. The drum defines a receiving chamber for receiving the biological material. The apparatus further comprises at least one microwave generator for irradiating the biological material with microwave radiation when received in the drum. The drum is rotatably arranged in the sample chamber about a rotation axis which is oriented substantially horizontally.

"Volatile components" according to the present invention mean components of the biological material, which can vaporize at a given temperature and pressure, preferably at temperatures at or below the boiling point of water and at atmosphere pressure or under (partial) vacuum. For example, the volatile components may be essential oils. Preferably, the volatile components may be terpenes, for example to be extracted from plant material from the biological family Cannabaceae.

"Drum" according to the present invention means a hollow body that has a rotation axis about which it is rotatable. The rotation axis preferably being defined by a longitudinal direction of the hollow body. The drum may be symmetrical in shape, such as substantially cylindrical. However, the drum is not limited to a cylindrical shape and various shapes are suitable, depending on the circumstances. For example, the drum could also be in the shape of a truncated cone, ellipsoid, a polyhedron and the like. According to a preferred embodiment, the drum may comprise a receiving opening at at least one of its axial sides - or simply is open on at least one of its axial sides - for (easily) receiving the biological material in the receiving chamber.

"Microwave generator" according to the present invention means any device capable of producing microwave radiation.

According to the first aspect, the structure and efficiency of the apparatus can be simplified. By having a substantially horizontal rotation axis, the receiving chamber is easily accessible from a front side without removing the drum and irrespective of the rotational position of the drum; e.g. in contrast to the apparatus of EP 1 629 725 A1. Consequently, the drum can be rotatably fixed in the sample chamber and does not have to be removed. Handling the biological material is thus simplified. Further, according to the present invention, the drum does not need to be sealed from the surrounding sample chamber, so that there is no need for a sealing element that would need to be replaced regularly. Therefore, the apparatus according to the present invention is simplified in structure and allows a more efficient operation.

Preferably, the apparatus is suitable for dry distillation, which is understood to be the heating of solid materials to produce a gaseous phase of the volatile components, which may be condensed into liquids or solids. This increases efficiency of extraction.

The invention can, for example, be applied to a plant, which encompasses whole plants or just parts thereof, or even intermediate products based on plants, such as pre-processed plant material. For example, present invention is applicable to cannabis stems/leaves/flower buds, fruits such as citrus fruits or parts thereof, herbs, spices, etc. The biological material can be efficiently deodorized by the claimed apparatus and method. Most preferred, the biological material is plant material from the biological family Cannabaceae.

Preferably, the receiving chamber may be configured to receive at least one flexible receptacle into which the biological material is loaded. Preferably, the receptacle is a bag such as a cotton bag.

Therefore, it is possible to further simplify handling and increase efficiency, as the biological material does not need to be handled as such - i.e. loosely -, but may be loaded into a receptacle which is easier to transport and load into and unload from the apparatus. Further, this allows for preparation of a new batch of receptacles while an extraction cycle is still running, thus minimizing unproductive time. In case of using a bag as a receptacle, this allows for using commercially available products, minimizing costs. Bags, like cotton bags, may also allow for easily pre-wetting the biological material, as the cotton material sucks up the pre-wetting liquid, like water, and keeps it ready for the distillation process. Preferably, the bag can be permeable to the volatile components, e.g. due to its material and/or a structure in the material (e.g. mesh, holes, slits, etc.) as described in the following.

The receptacle or bag may be made from a flexible material, such as a textile, for example a woven or non-woven fabric. While it is preferred that the receptacle is a bag such as a cotton bag, other materials are also suitable, such as synthetic fibers and/or other natural fibers such as hemp, jute, flax and the like. The receptacle may also be made from structured material, such as perforated synthetic foil.

It is preferred that the receptacle is at least partially permeable for microwave radiation, liquids and/or gases, so that e.g. the volatile components can easily evaporate. This further enhances efficiency.

Further according to the first aspect, a bottom space of the sample chamber is configured to be filled with a liquid such as water. Further, the drum is arranged such that part of the receiving chamber is arranged in the bottom space so as to immerse in the liquid when the bottom space is filled with said liquid. A level sensor may be provided to monitor the filling level of the bottom space.

This allows for easy and preferably continuous or periodical wetting of the biological material and enhances both, microwave absorption and evaporation, as the volatile components are more easily evaporated, thus further increasing efficiency of extraction. Further, versatility of the apparatus is increased as biological material in practically any hydration state may be used, for example also dried or freeze dried biological material.

Further according to the first aspect, the housing comprises an opening (in the following also referred to as "housing opening") for accessing the drum, preferably the receiving chamber. The opening is selectively closable by a door. The opening is positioned above the bottom space, such that a lowermost part of the opening is higher than an uppermost portion of the bottom space. The receiving opening, if present, can preferably be arranged to be at least partially aligned with the housing opening.

This further simplifies the structure of the apparatus, as the drum may remain rotatably installed within the apparatus, and the opening in the housing can be used for accessing the drum and preferably the receiving chamber thereof. In case of the bottom space, by positioning the opening above the bottom space it is ensured that no liquid arranged in the bottom space may spill through the opening. The housing opening and receiving opening being (at least partially) aligned allows for an easy access to the receiving chamber. Handling of the apparatus is thus further simplified.

Preferably, the apparatus may further comprise a plurality of microwave generators, preferably three microwave generators. The main emission directions of the microwave generators may be substantially orthogonal and preferably not-intersecting. Each main emission direction may be either substantially perpendicular or substantially parallel to the rotation axis of the drum.

It is further preferred that the microwave generator(s) is/are (a) magnetron(s). Using magnetrons allows for a cost efficient structure of the apparatus, as these are easily commercially available.

Using a plurality of microwave generators allows for the maximum power of irradiation to be increased and thus further increases efficiency of operation. By suitably arranging the preferred plurality of microwave generators, the interference of microwaves can be optimized to avoid heat spots and allow for even heating of the biological material, especially by avoiding large local interference maxima and by distributing the radiation evenly in the biological material, thus further enhancing extraction. By arranging the main emission directions as preferred, it is ensured that the microwave generators do not interfere with each other, thus avoiding damaging of the microwave generators.

Preferably, the apparatus may further comprise at least one heating element, such as a heating pad. The heating element may be arranged and configured to heat an inner wall of the housing defining the sample chamber.

By heating the inner wall, condensation of liquid and volatile components on the wall of the sample chamber can be avoided. Furthermore, heating power of the apparatus can be increased, so that batch time can be reduced. Therefore, efficiency of the apparatus can be thus further increased.

Preferably, at least one temperature sensor may be provided to monitor a process temperature at at least one desired location of the apparatus (and in case of a plurality of sensors, preferably at different locations) In case of the collection vessel be provided, the temperature sensor can be provided to monitor the temperature of the condensed volatile components as the process temperature. Further or alternative suitable locations may be in the sample chamber (e.g. at a top section thereof or close to or in the outlet) and/or in the receiving chamber and/or in the bottom space, the latter preferably for measuring/monitoring the temperature of the liquid filled in the bottom space.

By using at least one temperature sensor, the distillation process can be effectively monitored. For instance, a visual or acoustic warning may be output in case a defined temperature threshold value is underrun or exceeded. Furthermore, extraction quality can be increased, as for example in a case where the condensed volatile components collected in the collection vessel exceed a certain temperature, e.g. the temperature threshold value, the apparatus may be configured to stop irradiating the biological material and/or heating the at least one inner wall in order to stop power output, preferably until the temperature falls under the certain temperature again, upon which irradiation and/or heating the inner wall(s) may be continued. In general, preferably irradiation of the biological material and/or heating of the at least one inner wall can be stopped in case a define threshold value of the process temperature monitored by the temperature sensor is underrun or exceeded, and more preferably the irradiation and/or the heating is continued in case the process temperature again rises over or drops below the said threshold value.

Preferably, the apparatus may comprise a control unit to control the process of the apparatus. This is preferably done dependent on particular process parameters. These process parameters may be process temperatures, like temperatures in the sample chamber, of the liquid and/or of the biological material, e.g. based on the data received by the (temperature) sensors. Also, these process parameters may include the type and/or amount of biological material. The control unit may thus control the rotational speed of the drum, the microwave generator(s), the heating elements, the filling level of the bottom space, a cleaning cycle, and the like.

Preferably, the apparatus may further comprise at least one condenser configured to condense the volatile components. The condenser may be fluidly connected to the sample chamber via an outlet and may be arranged downstream of the sample chamber.

Therefore, the volatile components can be easily collected by condensation. A commercially available condenser may be used, simplifying the structure of the apparatus. By using a plurality of condensers, preferably in parallel, condensation capacity can be increased and the efficiency of the apparatus is further enhanced.

Preferably, the apparatus may further comprise a collection vessel configured for collecting the condensed volatile components. The collection vessel may be fluidly connected to and arranged downstream of the condenser(s). The collection vessel may preferably be configured for separating the condensed volatile components from residual liquid, such as condensed water. The collection vessel may preferably be fluidly connected to the sample chamber via an inlet to return the condensed residual liquid to the sample chamber. The inlet preferably is at a location different from the outlet.

The condensed volatile components can thus be easily collected and removed from the apparatus, further simplifying the handling. By the preferred separation of residual liquid, efficiency of the apparatus can be further enhanced as less liquid is wasted and by increasing purity of the condensed volatile components. If returning the residual liquid to the sample chamber at a location different from the outlet, cooling capacity of the condenser is not impeded by the liquid, increasing efficiency of the apparatus. The return of the residual liquid may be controlled either manually or even automatically, e.g. by use of the control unit.

Preferably, the drum may have a drum wall defining (e.g. circumferentially delimiting) the receiving chamber. Preferably, the drum wall may extend circumferentially about the rotation axis. The drum, preferably its drum wall if present, may be at least partially permeable to microwave radiation and/or liquid and/or the volatile components. The drum or drum wall may comprise at least one carrier protruding towards the receiving chamber to facilitate a tumbling motion of the biological material or receptacle, if present, when the drum is rotating.

The drum wall thus may act for securely retaining the biological material or receptacle in the receiving chamber, thus simplifying the handling. If the drum wall is permeable to microwave radiation and/or liquid and/or the volatile components, emission of microwave radiation can be enhanced and free flow of the liquid and/or volatile components is ensured. By providing carriers, the biological material is subject to higher mechanical energy generated by the tumbling motion, facilitating breakage of cell walls and extraction. Using carriers also provides even mixing of the biological material and thus more homogenous heating.

According to a second aspect, the present invention further provides a method for extracting volatile components from biological material, especially from plants. The method may optionally comprise providing an apparatus according to the present invention and as described herein above, so as to use the same for the said method. The method comprises loading the biological material into a receiving chamber of a drum being arranged in a sample chamber defined by a housing, in which sample chamber the drum is arranged rotatably about a rotation axis being oriented substantially horizontally. The method further comprises irradiating the biological material with microwave radiation while the drum is rotating, and collecting the volatile components.

The definitions, preferable aspects and advantages given above for the apparatus apply similarly to the method. Accordingly, present invention also provides a method for extracting volatile components with simplified handling and increased efficiency.

The method further comprises filling a bottom space of the sample chamber with liquid, preferably water. Part of the receiving chamber (i.e. a bottom part thereof) immerges in the liquid so that the biological material is wetted, preferably continuously or periodically wetted, with the liquid during rotation of the drum. The housing comprises an opening (in the following also referred to as "housing opening") for accessing the drum, preferably the receiving chamber. The opening is selectively closable by a door. The opening is positioned above the bottom space, such that a lowermost part of the opening is higher than an uppermost portion of the bottom space.

By wetting the biological material during extraction, preferably continuously or periodically, i.e. over a significant duration of the extraction, more liquid is available for extraction, thus further increasing efficiency of the method. By providing the liquid in a bottom space of the sample chamber, no separate means for water application are needed, thus simplifying the method. In a preferred embodiment, the filling level can be monitored or even controlled, e.g. dependent on particular process parameters like temperatures in the chamber, of the liquid and/or of the biological material, type and/or amount of biological material, and the like. By making (the part of) the receiving chamber immerge in liquid during rotation, it is possible to achieve a continuous or periodic wetting process, which allows for optimizing the amount of liquid available in the biological material for extraction. Efficiency of the method can thus be further enhanced. Furthermore, by wetting the biological material, scorching of the biological material can be prevented.

Preferably, the method may comprise pre-wetting the biological material with a liquid, preferably water, prior to loading it into the drum. The method may alternatively or in addition comprise pre-wetting the biological material in the filled bottom space, if present, preferably outside of irradiation of the biological material with microwave radiation.

By pre-wetting the biological material prior to extraction, more liquid is available for extraction, further increasing efficiency of the method. Further, by pre-wetting the biological material the versatility of the method is enhanced, as it is also possible to condition the biological material prior to extraction, if needed. This can be, e.g., beneficial for dried or freeze dried material.

Preferably, the method may comprise heating at least one inner wall of a housing defining the sample chamber.

This allows for a reduction of condensation of liquid on the inner walls, as also described herein above.

Preferably, the collecting of the volatile components may comprise condensing the volatile components in a condenser, which is fluidly connected to and arranged downstream of the sample chamber. The condensed volatile components may be collected in a collection vessel being fluidly connected to and arranged downstream of the condenser. The collected volatile components may be separated from residual liquid, such as condensed water, wherein the residual liquid may preferably be returned to the sample chamber, if desired.

This allows for simplified collection of the volatile components by condensation with a condenser, as described herein above. Efficiency of the extraction can thus also be enhanced. By separation from residual liquid, purity of the volatile components can be increased, thus further enhancing efficiency of the method.

Preferably, the method may further comprise monitoring a process temperature of the method, e.g. at at least one desired location of the apparatus (and in case of using a plurality of sensors preferably at different locations) by means of at least one temperature sensor. In case of the collection vessel be provided, at least the temperature of the condensed volatile components may be monitored as the process temperature. The method, preferably at least the irradiation of the biological material and/or the heating of the at least one inner wall, is then controlled based on the monitored process temperature.

By monitoring the process temperature, the distillation process can be effectively monitored. For instance, a visual or acoustic warning may be output in case a defined threshold value of the monitored process temperature is underrun or exceeded. Furthermore, extraction quality can be increased, as for example in a case where the condensed volatile components collected in the collection vessel exceed a certain temperature, e.g. the threshold value, the method may include stopping irradiation of the biological material and/or heating the at least one inner wall in order to stop power output, preferably until the temperature falls under the certain temperature again, upon which irradiation and/or heating the inner wall(s) may be continued.

In general, preferably controlling the method based on the monitored process temperature may comprise stopping the irradiation of the biological material and/or stopping the heating of the at least one inner wall in case a define threshold value of the monitored process temperature is underrun or exceeded. Controlling the method based on the monitored process temperature may preferably additionally comprise continuing the irradiation of the biological material and/or continuing the heating of the at least one inner wall in case the process temperature again rises over or drops below the said threshold value.

Preferably, the biological material may be provided, preferably filled, in a flexible receptacle, preferably a bag such as a cotton bag, prior to being loaded into the receiving chamber. Further, the biological material may be in a fresh or pre-processed state, such as dried or freeze-dried, frozen and/or cut. The biological material may be plant material from the biological family Cannabaceae, and the volatile components may be from the group of terpenes.

By loading the biological material in a receptacle such as a bag, handling of the biological material can be simplified and the loading time can be reduced, as described herein above. Further, this allows for using biological material in a substantially arbitrary state, such as freeze-dried, dried, fresh, pre-processed and/or cut. Versatility of the method can thus be increased.

These and further features and advantages will also become apparent from the figures. The examples shown in the figures and described hereinafter are non-limiting, and various modifications within the scope of the invention as defined by the appended claims are possible. Unless indicated otherwise or not feasible, all aspects of the present invention according to the claims and description can be combined arbitrarily.
- Fig. 1: shows a schematic front view of a distillation apparatus according to an embodiment of the present invention.
- Fig. 2: shows a sectional front view of a distillation apparatus according to another embodiment of the present invention.
- Fig. 3: shows a flow chart of a distillation method according to an embodiment of the present invention.

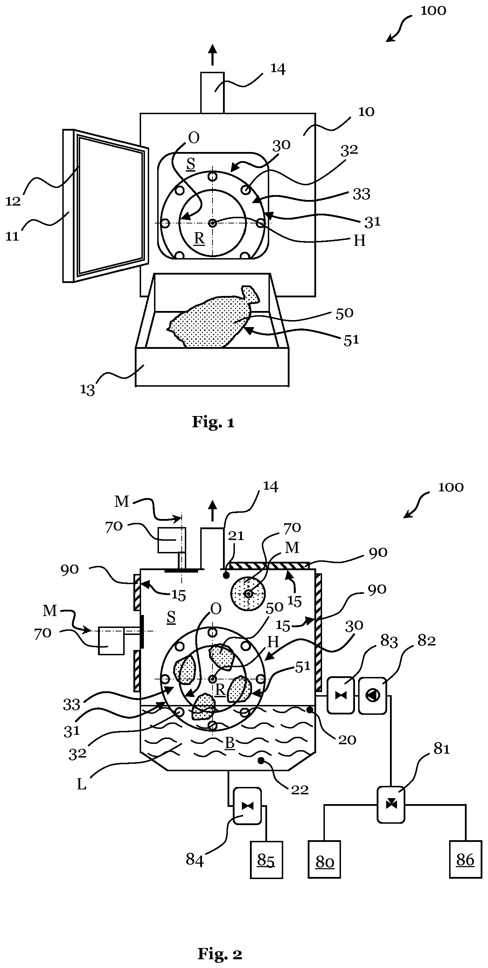

A distillation apparatus 100 according to the present invention is schematically shown in figs. 1 and 2. The distillation apparatus 100 is an apparatus 100 for extraction of volatile components such as terpenes from biological material 50 such as plants, for example from the biological family Cannabaceae. The apparatus 100 comprises a housing 10 which defines a sample chamber S. A drum 30 is arranged in the sample chamber S. The drum 30 defines a receiving chamber R for receiving the biological material 50. The drum 30 is rotatably arranged in the sample chamber S about a rotation axis H, which is oriented substantially horizontal. The drum 30 is, for example, driven by a motor that is preferably arranged outside of the sample chamber S. The apparatus 100 further comprises at least one microwave generator 70 for irradiating the biological material 50 with microwave radiation, when the biological material 50 is received in the drum 30.

The biological material 50 may be positioned in the receiving chamber R as loose material or in a flexible receptacle 51, as shown in Fig 1 and 2. The flexible receptacle 51 is easy to handle and may be prepared in advance and then transported to the distillation apparatus 100, e.g. in a tray 13. The receptacle 51 can be a bag made from cotton and may be reusable.

As particularly shown in fig. 2, the sample chamber S has a bottom space B that may be filled with a liquid L. The type of liquid L used depends on the specific extraction, i.e. on the process parameters and type of biological material. However, it is preferred that water is used as the liquid L. The bottom space B is configured to be filled with the liquid L from a liquid reservoir 80 fluidly connected to the sample chamber S. The liquid reservoir 80 may, for example, be a water container. A pump 82 may be provided and configured to selectively transfer the liquid from reservoir 80 to the bottom space using suitable valves 81, 83. A separate reservoir 86 may be used for a different liquid to be used for influencing the extraction or for containing a cleaning liquid to be used for cleaning the apparatus 100 in-between some or all extraction cycles. To release the liquid L from the bottom space, a collection container 85 may be fluidly connected to the bottom space, selectively closable and openable by a valve 84.

In a preferred embodiment, a level sensor 20 can be provided to monitor the filling level of the bottom space B. Also, temperature sensors 21, 22 may be provided to monitor a process temperature at at least one or a plurality desired location(s) of the apparatus 100. The process temperature can be the temperature in the sample chamber S (e.g. by temperature sensor 21 as exemplarily shown in Fig. 2) and/or in the receiving chamber and/or in the bottom space (e.g. by temperature sensor 22 as exemplarily shown in Fig. 2), preferably of the liquid filled in the bottom space B.

The apparatus 100 may comprise a control unit (not shown) to control the process of the apparatus 100; preferably dependent on particular process parameters like process temperatures (e.g. temperatures in the chamber(s), of the liquid and/or of the biological material), e.g. based on the data received by the sensors 20 to 22, and/or the type and/or amount of biological material, and the like. Hence, the filling level of the bottom space B can be controlled during operation or a cleaning cycle be carried out automatically. Also, the microwave generators 70 can be controlled to be operated for a most efficient and effective distillation process.

The drum 30 is arranged such that part of it - i.e. a bottom part thereof - immerses in the liquid L in the bottom space B, when it is filled with the liquid L. Therefore, in this case, when the drum 30 rotates, there is always a segment of the drum 30 entering the liquid L and another segment not in the liquid L. The dwell time of the segment in the liquid L depends on the rotational speed of the drum 30 and can be freely adjusted and also preferably controlled by the control unit.

As shown in Fig. 1, the housing 10 comprises an opening O via which the drum 30 or its receiving chamber R can be accessed. It is preferred that the drum 30 is fixedly installed in the apparatus 10, so that the receiving chamber R remains in place for loading and unloading of the biological material 50. The opening O is selectively closable by a door 11 of the housing 10. The door 11 is preferably attached by a hinge. The opening O is positioned above the bottom space B, i.e. the lowermost part of the opening O is higher than the uppermost portion of the bottom space B, so that the door 11 may be opened even if the bottom space B is maximum filled with the liquid L. The door 11 may further include a sealing 12 for sealing the sample chamber S against the environment of the apparatus 10 when being closed. Further means for promoting a tight close of the door 11 may be provided, such as springs, cabinet bolts, lever closures etc. The door 11 may also be optically transparent but non-transparent for microwave radiation to provide better monitoring of the extraction process. A door sensor (not shown) may be provided to monitor the closed state of the door 11. The control unit may be configured to prohibit or stop a process, particularly an operation of the microwave generators 70, if the door sensor monitors the door 11 not being in a closed or locked state.

The apparatus 100 may also comprise more than one microwave generator 70, i.e. a plurality of microwave generators 70, as best shown in fig. 2. The microwave generators 70 may, for example, be magnetrons. The microwave generators 70 have a main emission direction M, in which the microwave radiation is emitted into the sample chamber S. When a plurality of microwave generators 70 are used, it is preferred that the main emission directions M are substantially orthogonal and preferably not-intersecting with each other. This can be achieved by placing the microwave generators 70 at different sides of the housing 10. The main emission direction M may, for example, correspond to the longitudinal direction of a microwave generator's waveguide. If using three microwave generators 70, these sides preferably corresponding to three axes of Cartesian coordinates. Note that the leftmost and uppermost microwave generators 70 as shown in fig. 2 are preferably placed in different depths relative to the picture plane, so that their axes M are not intersecting. Furthermore, as shown in fig 2, each main emission direction M is preferably also either substantially perpendicular or substantially parallel to the rotation axis H of the drum 30.

The apparatus 100 may further comprise at least one heating element 90, as shown schematically in fig. 2. For example, such a heating element 90 may be a heating pad 90. The heating element 90 preferably is arranged and configured to heat an inner wall 15 of the housing 10 defining the sample chamber S. Here, the heating element 90 preferably is provided on/at the housing 10 to be in direct thermal contact with the inner wall 15. By heating the inner wall 15, condensation on the inner wall 15 can be avoided and heating can be made more efficient. The heating element 90 can also be controlled by the control unit.

While not explicitly shown in the figures, the apparatus 100 may further comprise one or more condensers configured to condense the volatile components. The condenser is preferably fluidly connected to the sample chamber S via an outlet 14 and arranged downstream of the sample chamber S. The condenser is preferably water-cooled. The fluid stream exiting the outlet 14 may be split into a plurality of streams, each fluidly connected to one of a plurality of condensers - preferably arranged in parallel - for increasing cooling capacity. To facilitate the volumetric flow rate of the fluid exiting the outlet 14, the condenser may further include a pump which may also be controlled by the control unit.

The volatile components condensed to a liquid (or solid) by the condenser are preferably collected in a collection vessel (not shown), such as a glass flask. It is also preferred that the collection vessel is configured for separating the condensed volatile components from residual liquid, such as condensed water. This separation may be done by using an elongated collection vessel, in which the condensed volatile components separate from residual liquid due to their different density and/or miscibility. For example, a commercial (glassware) separation system may be used. Preferably, the collection vessel or separation system can preferably be fluidly connected to the sample chamber S via an inlet (not shown) to return the condensed residual liquid, such as the condensed water, to the sample chamber S. Preferably, the return of liquid can be controlled by the control unit, e.g. by controlling a valve in a return piping. Preferably, the inlet is at a location different from the outlet 14, in order not to impede to cooling capacity of the condenser.

A vacuum pump (not shown) may be fluidly connected to the apparatus, e.g. the sample chamber and/or the condenser and/or the collection vessel, if present, so that the distillation process can be carried out under vacuum. The vacuum pump may be controlled by the control unit as well.

A temperature sensor (not shown) may be provided to monitor the temperature of the condensed volatile components, e.g. in the collection vessel, as the process temperature. Based on said process temperature, the control unit may control the process of the apparatus 100, e.g. by controlling the at least one microwave generator 70 and thus the irradiation of the biological material 50 and/or by controlling the at least one heating element 90 and thus the heating of the at least one inner wall 15. This will be described in more detail with respect to the method for extracting volatile components from biological material 50 herein below.

The drum 30 preferably has a drum wall 31 which defines the receiving chamber R. The drum wall 31 preferably extends circumferentially about the rotation axis H of the drum 30. The drum wall 31 may be one-piece or multi-piece. For example, the drum wall 31 may be made from a plurality of rods 32, extending in the axial direction of the drum 30 and fastened to circular end members 33 of the drum 30, as exemplarily shown in figs. 1 and 2. In another embodiment the drum wall 31 may be made of a mesh material or the like. The drum 30 and preferably its drum wall 31 is at least partially permeable to microwave radiation and/or liquid and/or the volatile components. This can, for example, be achieved by using rods or mesh material as described above. Preferably, the drum 30 is made from a non-metallic material in order not to interact with the microwave radiation. The drum 30 may be made from microwave transparent material, e.g. PTFE, ceramics, glass or the like.

The drum 30 and in particular the drum wall 31 may comprises one or more carriers protruding towards the receiving chamber R to facilitate a tumbling motion of the biological material 50 or receptacle 51, when the drum 30 is rotating. Such a carrier may, for example, be a protrusion formed on the drum wall 31 extending, for example, in a radial direction towards the rotational axis of the drum 30. Preferably, the rods 32 may act as the carriers, if present. The carrier thus acts as a carrier for biological material 50 or receptacle 51 contacting the protrusion, until contact is lost when the drum 30 has rotated far enough for the contact to be become instable. The biological material 50 or receptacle 51 then falls down from a particular height. This repeated motion of being carried for only part of the rotation and thus being lifted up, losing contact with the carrier and falling down thus forms a tumbling motion.

In the following, a method for extracting the volatile components from the biological material 50 according to the present invention and preferably by use of the apparatus 100 as described herein above is described.

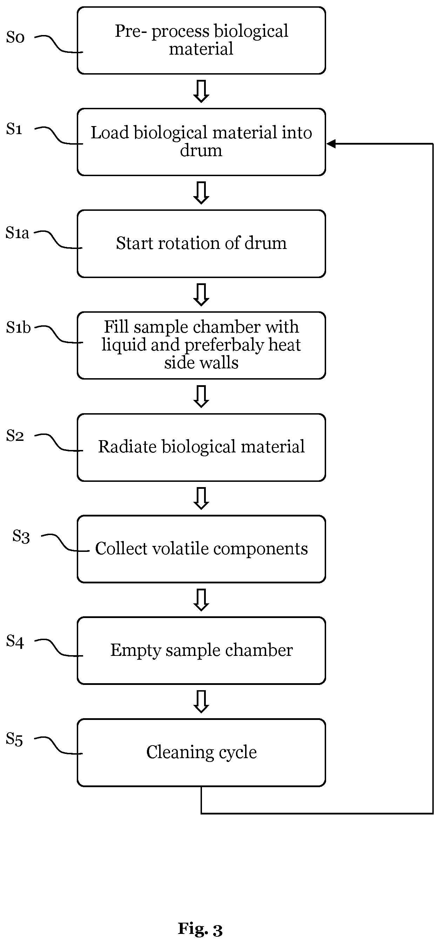

An example for a method according to the present invention including further optional steps is shown in Fig. 3. The method comprises step S1, which includes loading the biological material 50 (preferably be received or filled in the receptacle 51) into the receiving chamber R of the drum 30 being arranged in the sample chamber S, in which the drum 30 is arranged rotatably about the rotation axis H being oriented substantially horizontally. Preferably after loading of the drum 30 is completed, rotation of the drum 30 is started in step S1a. In step S2, the biological material 50 is irradiated with microwave radiation while the drum 30 is rotating. In step S3, the volatile components are collected; for example by condensation and subsequent collection preferably in the collection vessel.

For example, the method according to the present invention allows heating water within the biological material, so that the cells of the biological material are distended and, for example, their glands and oleiferous receptacles are ruptured to free volatile components.

As described above, the bottom space B of the sample chamber S is filled with the liquid L. This is done in step S1b prior to step S2, i.e. prior to the irradiation. It is also possible to (e.g. continuously or successively or periodically or otherwise in a preferably controlled manner) keep filling the bottom space B of the sample chamber S during extraction, e.g. to maintain a constant liquid volume in the bottom space B. By filling the bottom space B with liquid L, it is possible to wet the biological material 50 to a desired degree for extraction and preferably maintain this state during extraction, thus increasing the amount of liquid available for evaporation and promoting breakage of cell walls, while further increasing microwave absorption of the biological material 50.

If desired, the biological material 50 may be pre-wetted with a liquid, preferably water, prior to loading it into the drum 30 in step S0. In addition or alternatively, the biological material 50 may also be pre-wetted in the filled bottom space B, preferably outside of irradiation of the biological material 50 with microwave radiation. Other pre-processing steps for the biological material 50 are also possible, such as cutting. If the biological material 50 is loaded into the receptacle 51, this may be done at step S0.

It is possible to heat the inner wall 15 of the housing 10 in order to reduce condensation thereon, as described above. The inner walls 15 are preferably heated continuously throughout the whole extraction process, and preferably to a temperature higher than the boiling point at least of the volatile components, preferably also of the liquid L for a given pressure in the sample chamber S. Heating of the inner walls 15 is preferably started in step S1b, but may also be a separate step.

As described, the volatile components may be condensed for collecting them, preferably by using a condenser and collecting the volatile components in the collection vessel described above. This may also be part of Step S3. As already described, the collected volatile components are preferably separated from residual liquid, such as condensed water, and the residual liquid is preferably returned to the sample chamber S.

The method may further comprise monitoring a process temperature of the method, and controlling the method, preferably the irradiation S2 of the biological material 50 and/or the heating S1b of the at least one inner wall 15, based on the monitored process temperature. In this regard, controlling the method based on the monitored process temperature may preferably comprise stopping the irradiation S2 of the biological material 50 and/or stopping the heating S1b of the at least one inner wall 15 in case a define threshold value of the monitored process temperature is underrun or exceeded. More preferred, controlling the method based on the monitored process temperature may additionally comprise continuing the irradiation S2 of the biological material 50 and/or continuing the heating S1b of the at least one inner wall 15 in case the process temperature again rises over or drops below the said threshold value. In case of the collection vessel be provided, preferably at least the temperature of the condensed volatile components is monitored as the process temperature.

When extraction is finished, the sample chamber S may be emptied in step S4, for example by opening the door 11 and manually or automatically removing the biological material 50 or receptacle 51 from the drum 30. Prior to loading the receiving chamber R of the drum 30 with a new batch of biological material 50 or new receptacle 51, it is preferred that a cleaning cycle is performed in optional step S5. This can be done, for example, by using ethanol or other cleaning liquid provided in container 86 and transferred into the sample chamber S, for example through a nozzle or the like, via pump 82. The cleaning cycle S5 may or may not include heating the sample chamber S to a defined temperature. The cleaning liquid can be removed to the collection container 85 via valve 84 and the extraction method can be started again. It is preferred that a cleaning cycle is only done when different types of biological material are to be used, for example when changing from one plant type to another. If the same biological material is used for two consecutive batches, no cleaning cycle is necessary.

The present invention allows to extract volatile components from substantially any biological material 50. The state of the biological material 50 may be in principle arbitrary and especially a fresh or pre-processed state, such as dried or freeze-dried, frozen and/or cut. The present invention can be advantageously applied to plants or parts thereof, such as herbs, spices, fruits such as citrus fruits, flower buds etc. It is preferred that the biological material 50 is plant material from the biological family Cannabaceae, and the volatile component preferably is from the group of terpenes.

## Claims

1. Distillation apparatus (100) for extraction of volatile components from biological material (50), especially from plants, comprising:
- a housing (10) defining a sample chamber (S),
- a drum (30) arranged in the sample chamber (S), the drum (30) defining a receiving chamber (R) for receiving the biological material (50), and
- at least one microwave generator (70) for irradiating the biological material (50) with microwave radiation when received in the drum (30);
wherein the drum (30) is rotatably arranged in the sample chamber (S) about a rotation axis (H) which is oriented substantially horizontally,
wherein a bottom space (B) of the sample chamber (S) is configured to be filled with a liquid (L) such as water,
wherein the drum (30) is arranged such that part of the receiving chamber (R) is arranged in the bottom space (B) so as to immerse in the liquid (L) when the bottom space (B) is filled with said liquid (L), and
wherein the housing (10) comprises an opening (O) for accessing the drum (30), the opening (O) being selectively closable by a door (11),
**characterized in that**
the opening (O) is positioned above the bottom space (B), such that
a lowermost part of the opening (O) is higher than an uppermost portion of the bottom space (B).

2. Distillation apparatus (100) according to claim 1,
wherein the receiving chamber (R) is configured to receive at least one flexible receptacle (51) into which the biological material (50) is loaded, the receptacle (51) preferably being a bag such as a cotton bag.

3. Distillation apparatus (100) according to any one of the preceding claims, comprising:
- a plurality of microwave generators (70), preferably three microwave generators (70);
wherein the main emission directions (M) of the microwave generators (M) are substantially orthogonal and preferably not-intersecting, and
wherein each main emission (M) direction is preferably either substantially perpendicular or substantially parallel to the rotation axis (H) of the drum (30).

4. Distillation apparatus (100) according to any one of the preceding claims, further comprising:
- at least one heating element (90), such as a heating pad (90),
wherein the heating element (90) is arranged and configured to heat an inner wall (15) of the housing (10) defining the sample chamber (S).

5. Distillation apparatus (100) according to any one of the preceding claims, further comprising:
- at least one condenser configured to condense the volatile components,
wherein the condenser is fluidly connected to the sample chamber (S) via an outlet (14) and arranged downstream of the sample chamber (S).

6. Distillation apparatus (100) according to claim 5, further comprising:
- a collection vessel configured for collecting the condensed volatile components, the collection vessel being fluidly connected to and arranged downstream of the condenser,
wherein the collection vessel preferably is configured for separating the condensed volatile components from residual liquid, such as condensed water,
wherein the collection vessel preferably is fluidly connected to the sample chamber (S) via an inlet to return the condensed residual liquid to the sample chamber (S), wherein the inlet preferably is at a location different from the outlet (14).

7. Distillation apparatus (100) according to any one of the preceding claims, further comprising:
- at least one temperature sensor (21, 22) provided to monitor a process temperature at at least one desired location of the apparatus (100), wherein in case of the collection vessel be provided, preferably the temperature sensor is provided to monitor the temperature of the condensed volatile components as the process temperature, and/or
- a control unit to control the process of the apparatus (100), preferably based on process parameters like the process temperature.

8. Distillation apparatus (100) according to any one of the preceding claims,
wherein the drum (30) has a drum wall (31) defining the receiving chamber (R), the drum wall (31) preferably extending circumferentially about the rotation axis (H), and/or
wherein the drum (30), preferably its drum wall (31) if present, is at least partially permeable to microwave radiation and/or liquid and/or the volatile components, and/or
wherein the drum (30) comprises at least one carrier protruding towards the receiving chamber (R) to facilitate a tumbling motion of the biological material (50) or receptacle (51), if present, when the drum (30) is rotating.

9. Method for extracting volatile components from biological material (50), especially from plants, comprising:
- loading (S1) the biological material (50) into a receiving chamber (R) of a drum (30) being arranged in a sample chamber (S) defined by a housing (10), in which sample chamber (S) the drum (30) is arranged rotatably about a rotation axis (H) being oriented substantially horizontally,
- filling (S1b) a bottom space (B) of the sample chamber (S) with liquid (L),
wherein part of the receiving chamber (R) immerges in the liquid (L) so that the biological material (50) is wetted with the liquid (L) during rotation of the drum (30),
- irradiating (S2) the biological material (50) with microwave radiation while the drum (30) is rotating, and
- collecting (S3) the volatile components,
wherein the housing (10) comprises an opening (O) for accessing the drum (30), the opening (O) being selectively closable by a door (11), and
wherein the opening (O) is positioned above the bottom space (B), such that a lowermost part of the opening (O) is higher than an uppermost portion of the bottom space (B).

10. Method according to claim 9,
wherein the liquid is water,
and/or
wherein the part of the receiving chamber (R) immerges in the liquid (L) so that the biological material (50) is continuously or periodically wetted with the liquid (L) during rotation of the drum (30).

11. Method according to claim 9 or 10, further comprising:
- pre-wetting (S0) the biological material (50) with a liquid, preferably water, prior to loading it into the drum (30) and/or in the filled bottom space (B), if present, preferably outside of irradiation of the biological material (50) with microwave radiation.

12. Method according to any one of claims 9 to 11, further comprising:
- heating (S1b) at least one inner wall (15) of a housing (10) defining the sample chamber (S).

13. Method according to any one of claims 9 to 12,
wherein the step of collecting (S3) of the volatile components comprises condensing the volatile components in a condenser, which is fluidly connected to and arranged downstream of the sample chamber (S),
- wherein the condensed volatile components are preferably collected in a collection vessel being fluidly connected to and arranged downstream of the condenser,
- wherein the collected volatile components are preferably separated from residual liquid, such as condensed water, and wherein the residual liquid is preferably returned to the sample chamber (S), if desired, and/or
wherein the method further comprises monitoring a process temperature of the method, and controlling the method, preferably the irradiation (S2) of the biological material (50) and/or the heating (S1b) of the at least one inner wall (15), based on the monitored process temperature,
- wherein controlling the method based on the monitored process temperature preferably comprises stopping the irradiation (S2) of the biological material (50) and/or stopping the heating (S1b) of the at least one inner wall (15) in case a define threshold value of the monitored process temperature is underrun or exceeded, and further preferably comprises continuing the irradiation (S2) of the biological material (50) and/or continuing the heating (S1b) of the at least one inner wall (15) in case the process temperature again rises over or drops below the said threshold value,
- wherein in case of the collection vessel be provided, preferably at least the temperature of the condensed volatile components is monitored as the process temperature.

14. Method according to any one of claims 9 to 13,
- wherein the biological material (50) is provided, preferably filled, in a flexible receptacle (51), preferably a bag such as a cotton bag, prior to being loaded into the receiving chamber (R), and/or
- wherein the biological material (50) is in a fresh or pre-processed state, such as dried or freeze-dried, frozen and/or cut, prior to being loaded into the receiving chamber (R), and/or
- wherein the biological material (50) is plant material from the biological family Cannabaceae, and wherein the volatile component preferably is from the group of terpenes.

## Patentansprüche

1. Destillationsvorrichtung (100) zur Extraktion flüchtiger Bestandteile aus biologischem Material (50), insbesondere aus Pflanzen, aufweisend:
- ein eine Probenkammer (S) definierendes Gehäuse (10),
- eine in der Probenkammer (S) angeordnete Trommel (30), wobei die Trommel (30) eine Aufnahmekammer (R) zur Aufnahme des biologischen Materials (50) definiert, und
- zumindest einen Mikrowellengenerator (70) zum Bestrahlen des biologischen Materials (50) mit Mikrowellenstrahlung, wenn es in der Trommel (30) aufgenommen ist;
wobei die Trommel (30) in der Probenkammer (S) um eine im Wesentlichen horizontal ausgerichtete Drehachse (H) drehbar angeordnet ist,
wobei ein Bodenraum (B) der Probenkammer (S) so ausgebildet ist, dass er mit einer Flüssigkeit (L), beispielsweise Wasser, gefüllt werden kann,
wobei die Trommel (30) so angeordnet ist, dass ein Teil der Aufnahmekammer (R) im Bodenraum (B) so angeordnet ist, dass er in die Flüssigkeit (L) eintaucht, wenn der Bodenraum (B) mit der Flüssigkeit (L) gefüllt ist, und
wobei das Gehäuse (10) für den Zugang zur Trommel (30) eine Öffnung (O) aufweist, wobei die Öffnung (O) wahlweise durch eine Tür (11) verschließbar ist,
**dadurch gekennzeichnet, dass**
die Öffnung (O) oberhalb des Bodenraums (B) so angeordnet ist, dass ein unterster Teil der Öffnung (O) höher liegt als ein oberster Abschnitt des Bodenraums (B).

2. Destillationsvorrichtung (100) nach Anspruch 1,
wobei die Aufnahmekammer (R) so ausgebildet ist, dass sie zumindest einen flexiblen Behälter (51) aufnehmen kann, in den das biologische Material (50) eingefüllt wird, wobei der Behälter (51) vorzugsweise ein Beutel, beispielsweise ein Baumwollbeutel, ist.

3. Destillationsvorrichtung (100) nach einem der vorherigen Ansprüche, aufweisend:
- eine Mehrzahl an Mikrowellengeneratoren (70), vorzugsweise drei Mikrowellengeneratoren (70);
wobei die Hauptstrahlungsrichtungen (M) der Mikrowellengeneratoren (M) im Wesentlichen orthogonal zueinander sind und sich vorzugsweise nicht schneiden, und
wobei jede Hauptstrahlungsrichtung (M) vorzugsweise entweder im Wesentlichen senkrecht oder im Wesentlichen parallel zur Drehachse (H) der Trommel (30) verläuft.

4. Destillationsvorrichtung (100) nach einem der vorherigen Ansprüche, ferner aufweisend:
- zumindest ein Heizelement (90), beispielsweise ein Heizkissen (90),
wobei das Heizelement (90) so angeordnet und ausgebildet ist, dass es eine die Probenkammer (S) begrenzende Innenwand (15) des Gehäuses (10) erhitzt.

5. Destillationsvorrichtung (100) nach einem der vorherigen Ansprüche, ferner aufweisend:
- zumindest einen Kondensator, der so ausgebildet ist, dass er die flüchtigen Bestandteile kondensiert,
wobei der Kondensator über einen Auslass (14) strömungstechnisch mit der Probenkammer (S) verbunden ist und stromabwärts der Probenkammer (S) angeordnet ist.

6. Destillationsvorrichtung (100) nach Anspruch 5, ferner aufweisend:
- einen Sammelbehälter, der so ausgebildet ist, dass er die kondensierten flüchtigen Bestandteile sammelt, wobei der Sammelbehälter strömungstechnisch mit dem Kondensator verbunden ist und stromabwärts davon angeordnet ist,
wobei der Sammelbehälter vorzugsweise dazu ausgebildet ist, die kondensierten flüchtigen Bestandteile von Restflüssigkeit, wie beispielsweise Kondenswasser, zu trennen,
wobei der Sammelbehälter vorzugsweise über einen Einlass mit der Probenkammer (S) strömungstechnisch verbunden ist, um die kondensierte Restflüssigkeit in die Probenkammer (S) zurückzuführen,
wobei sich der Einlass vorzugsweise an einer anderen Stelle als der Auslass (14) befindet.

7. Destillationsvorrichtung (100) nach einem der vorherigen Ansprüche, ferner aufweisend:
- zumindest einen Temperatursensor (21, 22), der zur Überwachung einer Prozesstemperatur an zumindest einer gewünschten Stelle der Vorrichtung (100) vorgesehen ist, wobei im Falle eines vorhandenen Sammelbehälters der Temperatursensor vorzugsweise dazu vorgesehen ist, die Temperatur der kondensierten flüchtigen Komponenten als Prozesstemperatur zu überwachen, und/oder
- eine Steuereinheit zur Steuerung des Prozesses der Vorrichtung (100), vorzugsweise auf der Grundlage von Prozessparametern wie der Prozesstemperatur.

8. Destillationsvorrichtung (100) nach einem der vorherigen Ansprüche,
wobei die Trommel (30) eine die Aufnahmekammer (R) definierende Trommelwand (31) aufweist, wobei sich die Trommelwand (31) vorzugsweise in Umfangsrichtung um die Drehachse (H) erstreckt, und/oder
wobei die Trommel (30), vorzugsweise deren Trommelwand (31), sofern vorhanden, zumindest teilweise für Mikrowellenstrahlung und/oder Flüssigkeit und/oder die flüchtigen Bestandteile durchlässig ist, und/oder
wobei die Trommel (30) zumindest einen Träger aufweist, der in Richtung der Aufnahmekammer (R) vorsteht, um, wenn sich die Trommel (30) dreht, eine Taumelbewegung des biologischen Materials (50) oder des Behälters (51), falls vorhanden, zu ermöglichen.

9. Verfahren zur Extraktion flüchtiger Bestandteile aus biologischem Material (50), insbesondere aus Pflanzen, aufweisend:
- Einfüllen (S1) des biologischen Materials (50) in eine Aufnahmekammer (R) einer Trommel (30), die in einer durch ein Gehäuse (10) definierten Probenkammer (S) angeordnet ist, wobei die Trommel (30) in der Probenkammer (S) um eine im Wesentlichen horizontal ausgerichtete Drehachse (H) drehbar angeordnet ist,
- Befüllen (S1b) eines Bodenraums (B) der Probenkammer (S) mit Flüssigkeit (L), wobei ein Teil der Aufnahmekammer (R) in die Flüssigkeit (L) so eintaucht, dass das biologische Material (50) während der Drehung der Trommel (30) mit der Flüssigkeit (L) benetzt wird,
- Bestrahlen (S2) des biologischen Materials (50) mit Mikrowellenstrahlung, während sich die Trommel (30) dreht, und
- Sammeln (S3) der flüchtigen Bestandteile,
wobei das Gehäuse (10) für den Zugang zur Trommel (30) eine Öffnung (O) aufweist, wobei die Öffnung (O) wahlweise durch eine Tür (11) verschließbar ist, und
wobei die Öffnung (O) über dem Bodenraum (B) so angeordnet ist, dass ein unterster Teil der Öffnung (O) höher liegt als ein oberster Abschnitt des Bodenraums (B).

10. Verfahren nach Anspruch 9,
wobei die Flüssigkeit Wasser ist,
und/oder
wobei der Teil der Aufnahmekammer (R) in die Flüssigkeit (L) so eintaucht, dass das biologische Material (50) während der Drehung der Trommel (30) kontinuierlich oder periodisch mit der Flüssigkeit (L) benetzt wird.

11. Verfahren nach Anspruch 9 oder 10, ferner aufweisend:
- Vorbenetzen (S0) des biologischen Materials (50) mit einer Flüssigkeit, vorzugsweise Wasser, vor dem Einfüllen in die Trommel (30) und/oder in den gefüllten Bodenraum (B), falls vorhanden, vorzugsweise außer Reichweite der Bestrahlung des biologischen Materials (50) mit Mikrowellenstrahlung.

12. Verfahren nach einem der Ansprüche 9 bis 11, ferner aufweisend:
- Erhitzen (S1b) zumindest einer Innenwand (15) eines die Probenkammer (S) definierenden Gehäuses (10).

13. Verfahren nach einem der Ansprüche 9 bis 12,
wobei der Schritt des Sammelns (S3) der flüchtigen Bestandteile das Kondensieren der flüchtigen Bestandteile in einem Kondensator umfasst, der strömungstechnisch mit der Probenkammer (S) verbunden und stromabwärts davon angeordnet ist,
- wobei die kondensierten flüchtigen Bestandteile vorzugsweise in einem Sammelbehälter gesammelt werden, der strömungstechnisch mit dem Kondensator verbunden ist und stromabwärts davon angeordnet ist,
- wobei die gesammelten flüchtigen Bestandteile vorzugsweise von der Restflüssigkeit, wie beispielsweise Kondenswasser, getrennt werden, und wobei die Restflüssigkeit vorzugsweise, falls gewünscht, in die Probenkammer (S) zurückgeführt wird,
und/oder
wobei das Verfahren ferner das Überwachen einer Prozesstemperatur des Verfahrens und das Steuern des Verfahrens, vorzugsweise der Bestrahlung (S2) des biologischen Materials (50) und/oder der Erhitzung (S1b) der zumindest einen Innenwand (15), auf der Grundlage der überwachten Prozesstemperatur umfasst,
- wobei die Steuerung des Verfahrens auf der Grundlage der überwachten Prozesstemperatur vorzugsweise das Beenden der Bestrahlung (S2) des biologischen Materials (50) und/oder das Beenden der Erhitzung (S1b) der zumindest einen Innenwand (15) umfasst, falls ein definierter Schwellenwert der überwachten Prozesstemperatur unterschritten oder überschritten wird, und ferner vorzugsweise das Fortsetzen der Bestrahlung (S2) des biologischen Materials (50) und/oder das Fortsetzen der Erhitzung (S1b) der zumindest einen Innenwand (15) umfasst, falls die Prozesstemperatur erneut über den genannten Schwellenwert ansteigt oder unter diesen fällt,
- wobei im Falle eines vorgesehenen Sammelbehälters vorzugsweise zumindest die Temperatur der kondensierten flüchtigen Bestandteile als Prozesstemperatur überwacht wird.

14. Verfahren nach einem der Ansprüche 9 bis 13,
- wobei das biologische Material (50) vor dem Einbringen in die Aufnahmekammer (R) in einem flexiblen Behälter (51), vorzugsweise einem Beutel wie beispielsweise einem Baumwollbeutel, bereitgestellt, vorzugsweise eingefüllt wird, und/oder
- wobei sich das biologische Material (50) vor dem Einbringen in die Aufnahmekammer (R) in einem frischen oder vorverarbeiteten Zustand befindet, beispielsweise getrocknet oder gefriergetrocknet, gefroren und/oder zerkleinert, und/oder
- wobei das biologische Material (50) Pflanzenmaterial aus der biologischen Familie der Cannabaceae darstellt und wobei die flüchtige Komponente vorzugsweise aus der Gruppe der Terpene stammt.

## Revendications

1. Appareil (100) de distillation pour l'extraction de composants volatils à partir d'un matériau biologique (50), notamment à partir de plantes, comportant :
- un boîtier (10) définissant une chambre d'échantillon (S),
- un tambour (30) agencé dans la chambre d'échantillon (S), le tambour (30) définissant une chambre de réception (R) pour recevoir le matériau biologique (50), et
- au moins un générateur de micro-ondes (70) pour irradier le matériau biologique (50) avec un rayonnement micro-ondes lorsqu'il est reçu dans le tambour (30) ;
dans lequel le tambour (30) est agencé en rotation dans la chambre d'échantillon (S) autour d'un axe de rotation (H) qui est orienté sensiblement horizontalement,
dans lequel un espace de fond (B) de la chambre d'échantillon (S) est configuré pour être rempli d'un liquide (L) tel que de l'eau,
dans lequel le tambour (30) est agencé de sorte qu'une partie de la chambre de réception (R) est agencée dans l'espace de fond (B) de manière à s'immerger dans le liquide (L) lorsque l'espace de fond (B) est rempli dudit liquide (L), et
dans lequel le boîtier (10) comporte une ouverture (O) d'accès au tambour (30), l'ouverture (O) étant sélectivement refermable par une porte (11), **caractérisé en ce que**
l'ouverture (O) est positionnée au-dessus de l'espace de fond (B), de sorte que
une partie la plus basse de l'ouverture (O) est plus haute qu'une partie la plus haute de l'espace de fond (B).

2. Appareil (100) de distillation selon la revendication 1,
dans lequel la chambre de réception (R) est configurée pour recevoir au moins un réceptacle (51) flexible dans lequel le matériau biologique (50) est chargé, le réceptacle (51) étant de préférence un sac tel qu'un sac en coton.

3. Appareil (100) de distillation selon l'une quelconque des revendications précédentes, comportant :
- une pluralité de générateurs de micro-ondes (70), de préférence trois générateurs de micro-ondes (70) ;
dans lequel les principales directions d'émission (M) des générateurs de micro-ondes (M) sont sensiblement orthogonales et, de préférence, ne se croisent pas, et
dans lequel chaque direction d'émission principale (M) est de préférence sensiblement perpendiculaire ou sensiblement parallèle à l'axe de rotation (H) du tambour (30).

4. Appareil (100) de distillation selon l'une quelconque des revendications précédentes, comportant en outre :
- au moins un élément chauffant (90), tel qu'un coussin chauffant (90),
dans lequel l'élément chauffant (90) est agencé et configuré pour chauffer une paroi interne (15) du boîtier (10) définissant la chambre d'échantillon (S).

5. Appareil (100) de distillation selon l'une quelconque des revendications précédentes, comportant en outre :
- au moins un condenseur configuré pour condenser les composants volatils, dans lequel le condenseur est relié fluidiquement à la chambre d'échantillon (S) par le biais d'une sortie (14) et agencé en aval de la chambre d'échantillon (S).

6. Appareil (100) de distillation selon la revendication 5, comportant en outre :
- un récipient de collecte configuré pour collecter les composants volatils condensés, le récipient de collecte étant relié fluidiquement au condenseur et agencé en aval du condenseur,
dans lequel le récipient de collecte est de préférence configuré pour séparer les composants volatils condensés du liquide résiduel, tel que de l'eau condensée,
dans lequel le récipient de collecte est de préférence relié fluidiquement à la chambre d'échantillon (S) par le biais d'une entrée pour renvoyer le liquide résiduel condensé dans la chambre d'échantillon (S), dans lequel l'entrée se situe de préférence à un emplacement différent de la sortie (14).

7. Appareil (100) de distillation selon l'une quelconque des revendications précédentes, comportant en outre :
- au moins un capteur de température (21, 22) prévu pour surveiller une température de processus à au moins un emplacement souhaité de l'appareil (100), dans lequel, dans le cas où le récipient de collecte est prévu, de préférence le capteur de température est prévu pour surveiller la température des composants volatils condensés en tant que température de processus, et/ou
- une unité de commande pour commander le processus de l'appareil (100), de préférence sur la base de paramètres de processus tels que la température de processus.

8. Appareil (100) de distillation selon l'une quelconque des revendications précédentes,
dans lequel le tambour (30) présente une paroi de tambour (31) définissant la chambre de réception (R), la paroi de tambour (31) s'étendant de préférence circonférentiellement autour de l'axe de rotation (H), et/ou
dans lequel le tambour (30), de préférence sa paroi de tambour (31), si présente, est au moins partiellement perméable au rayonnement micro-ondes et/ou au liquide et/ou aux composants volatils, et/ou
dans lequel le tambour (30) comporte au moins un support faisant saillie vers la chambre de réception (R) pour faciliter un mouvement de basculement du matériau biologique (50) ou du réceptacle (51), si présent, lorsque le tambour (30) tourne.

9. Procédé d'extraction de composants volatils à partir d'un matériau biologique (50), notamment à partir de plantes, comportant :
- le chargement (S1) du matériau biologique (50) dans une chambre de réception (R) d'un tambour (30) étant agencé dans une chambre d'échantillon (S) définie par un boîtier (10), dans laquelle chambre d'échantillon (S) le tambour (30) est agencé en rotation autour d'un axe de rotation (H) orienté sensiblement horizontalement,
- le remplissage (S1b) d'un espace de fond (B) de la chambre d'échantillon (S) avec du liquide (L),
dans lequel une partie de la chambre de réception (R) s'immerge dans le liquide (L) de sorte que le matériau biologique (50) soit humidifié avec le liquide (L) pendant la rotation du tambour (30),
- l'irradiation (S2) du matériau biologique (50) avec un rayonnement micro-ondes pendant que le tambour (30) tourne, et
- la collecte (S3) des composants volatils,
dans lequel le boîtier (10) comporte une ouverture (O) d'accès au tambour (30), l'ouverture (O) étant sélectivement refermable par une porte (11), et
dans lequel l'ouverture (O) est positionnée au-dessus de l'espace de fond (B), de sorte qu'une partie la plus basse de l'ouverture (O) est plus haute qu'une partie la plus haute de l'espace de fond (B).

10. Procédé selon la revendication 9,
dans lequel le liquide est de l'eau,
et/ou
dans lequel la partie de la chambre de réception (R) s'immerge dans le liquide (L) de sorte que le matériau biologique (50) soit humidifié en continu ou périodiquement avec le liquide (L) pendant la rotation du tambour (30).

11. Procédé selon la revendication 9 ou 10, comportant en outre :
- la préhumidification (S0) du matériau biologique (50) avec un liquide, de préférence de l'eau, avant de le charger dans le tambour (30) et/ou dans l'espace de fond (B) rempli, si présent, de préférence en dehors de l'irradiation du matériau biologique (50) avec un rayonnement micro-ondes.

12. Procédé selon l'une quelconque des revendications 9 à 11, comprenant en outre :
- le chauffage (S1b) d'au moins une paroi interne (15) d'un boîtier (10) définissant la chambre d'échantillon (S).

13. Procédé selon l'une quelconque des revendications 9 à 12,
dans lequel l'étape de collecte (S3) des composants volatils comporte la condensation des composants volatils dans un condenseur, qui est relié fluidiquement à la chambre d'échantillon (S) et agencé en aval de celle-ci,
- dans lequel les composants volatils condensés sont de préférence collectés dans un récipient de collecte étant relié fluidiquement au condenseur et agencé en aval de celui-ci,
- dans lequel les composants volatils collectés sont de préférence séparés du liquide résiduel, tel que de l'eau condensée, et dans lequel le liquide résiduel est de préférence renvoyé dans la chambre d'échantillon (S), si souhaité, et/ou
dans lequel le procédé comporte en outre la surveillance d'une température de processus du procédé, et la commande du procédé, de préférence l'irradiation (S2) du matériau biologique (50) et/ou le chauffage (S1b) de l'au moins une paroi interne (15), sur la base de la température de processus surveillée,
- dans lequel la commande du procédé sur la base de la température de processus surveillée comporte de préférence l'arrêt de l'irradiation (S2) du matériau biologique (50) et/ou l'arrêt du chauffage (S1b) de l'au moins une paroi interne (15) dans le cas où une valeur seuil définie de la température de processus surveillée est franchie à la baisse ou à la hausse, et comporte en outre de préférence la poursuite de l'irradiation (S2) du matériau biologique (50) et/ou la poursuite du chauffage (S1b) de l'au moins une paroi interne (15) si la température de processus repasse au-dessus ou en dessous de ladite valeur seuil,
- dans lequel, dans le cas où le récipient de collecte est prévu, de préférence au moins la température des composants volatils condensés est surveillée comme température de processus.

14. Procédé selon l'une quelconque des revendications 9 à 13,
- dans lequel le matériau biologique (50) est prévu, de préférence versé, dans un réceptacle (51) flexible, de préférence un sac tel qu'un sac en coton, avant d'être chargé dans la chambre de réception (R), et/ou
- dans lequel le matériau biologique (50) est dans un état frais ou prétraité, tel que séché ou lyophilisé, congelé et/ou coupé, avant d'être chargé dans la chambre de réception (R), et/ou
- dans lequel le matériau biologique (50) est un matériau végétal de la famille biologique Cannabaceae, et dans lequel le composant volatil provient de préférence du groupe des terpènes.
